# EUROPEAN PATENT SPECIFICATION

(11) **EP 3 888 469 B1**
(45) Date of publication and mention of the grant of the patent: **04.06.2025**
(21) Application number: 21185170.4
(22) Date of filing: 12.07.2021
(51) Int. Cl.: A23G 3/02, A23G 3/34, A23G 1/20, A23G 1/00, A23G 3/20

(54) **FOOD PRODUCTION LINE, DEPOSITOR AND NOZZLES FOR CONFECTIONERY ARTICLES**
LEBENSMITTELPRODUKTIONSLINIE, AUSGABEVORRICHTUNG UND AUSGABEDÜSEN FÜR SÜSSWARENARTIKEL
LIGNE DE PRODUCTION, DEPOSITEUR ET BUSE POUR DES CONFISERIES

(43) Date of publication of application: 06.10.2021
(73) Proprietor: Aasted ApS, 3520 Farum (DK)
(72) Inventor: Jensen, René Damtoft, 2730 Herlev (DK)
(74) Representative: Heiden, Finn

(56) References cited:
- EP-A2- 0 034 884
- WO-A1-2006/095220
- WO-A1-2016/198659
- DE-A1- 2 541 419
- US-A- 2 127 850

## Description

The present invention concerns a food production line apparatus for continuous depositing of a confectionery mass on an underlying support, having a mass depositor unit, a conveyor carrying the underlaying support for receiving the deposited mass, that the mass depositing unit has a horizontally extending, plate-shaped mass distribution block arranged above the underlying support, which plate-shaped mass distribution block comprises at least one mass chamber arranged inside the block, and which mass chamber is connected via at least one volumetric mass displacement unit with a storage of confectionery mass to be deposited, that the at least one volumetric displacement unit (18, 19) is arranged above the mass chamber and comprises a plurality of pistons (26, 27) and one or more rotary valves, which pistons (26, 27) and rotary valves have sliding surfaces (28, 29) supported by associated stationery surfaces (28, 29) at the mass depositor unit (12), a plurality of nozzles each being a separate unit, arranged at the bottom of the mass distribution block as each nozzle is connected to the mass chamber via a respective channel, and each nozzle having a through extending inner nozzle channel.

The invention also relates to a separate mass depositing unit to be incorporated into the inventive food production line apparatus.

The invention further relates to separate nozzles to be incorporated into the inventive food production line apparatus or the inventive mass depositor unit.

Furthermore, the invention relates to use of such food production line apparatus, mass depositor unit or nozzle for continuous depositing of specific confectionery masses.

Food production line apparatuses of the introductory art are widely applied in the food industry for producing a wide range of food articles made of confectionery mass. The production line apparatuses are often large, technically complicated and extensive as they can be adapted to produce many thousands of articles per hour, typically from a few hundred kilograms food articles per hour and up to some thousands of kilograms confectionery food articles per hour.

For achieving the exact correct amount of mass deposited from each nozzle, the at least one volumetric displacement unit typically comprises a plurality of pistons and often one or more rotary valves as well, which pistons are arranged above or to the side of the mass distribution block with the plurality of nozzles. The pistons and rotary valves have sliding surfaces supported by associated stationery surfaces at the mass depositing unit.

WO 2006/095220 A1 discloses a production line apparatus and depositor of the introductory art, by which the pistons provide deposition of accurate mass volumes out through the permanently open nozzles during intermittent, continuous highspeed production. The rotary valves ensure simultaneous closure against the storage of mass and subsequent new opening for mass therefrom. The inner channel of the nozzles is slightly narrowing in towards the outlet opening.

WO 2016/198659 A1 discloses a different type depositor for aerated chocolate mass in a closed high pressure chamber, at the bottom of which is arranged nozzles for depositing aerated chocolate mass. On top of the chamber is arranged pneumatic cylinders controlling vertical movement of rods or valve spindles extending down through the chamber and down into each respective nozzle. The tip of each spindle has the shape of a conus, so that it fits tightly with an upper conical surface of the respective nozzle in the closed position. The nozzles have upper conical parts and lower conical parts.

DE 25 41 419 A1 discloses a further type of production line and depositor for chocolate mass, having a mass chamber, the bottom of which is made of two hole-plates arranged upon each other. The lower hole-plate is fixed and the upper hole-plate is during depositing mass movable in a circular path in the plane of the plates. The plates provide an opening/ closure device for depositing mass from the chamber through the holes. Mass may easily enter in between between the plates and adversely affect open/closure performance.

EP 0 034 884 A2 discloses a further production line and depositor for aerated chocolate mass under high pressure in a central manifold mass chamber. Fifteen pair of valve arrangements are fed from the chamber. The bottom of each arrangement is closed by a floating valve plate arranged upon another fixed valve plate. Both plates have a central conical orifice, arranged mirrored to each other with a sharp edge orifice as result. A lever assembly controls vertical movement of a central rod. The lower, conical end of the rod is either in a predetermined distance of the conical orifice of the upper plate during deposition of aerated mass, or is in tight engagement with the conical orifice of the upper plate, so that deposition of mass is stopped until next cycle begins. Closure of the orifices may also be obtained when the upper valve plate is displaced so that it fully covers the orifice of the fixed valve plate.

The application of pistons is the most widely applied in the food industry for depositing exact amounts of confectionery mass into cavities in underlaying, continuously moving moulds or onto an underlaying, continuously moving plastic or steel belt. Fine chocolate articles are made by the moulding process, often as a shell in a first step, then filled with a crème and closed with a bottom layer of chocolate. It could also be filled articles made in one go by the "One-shot" process as center-filling and chocolate cover is deposited as one lump into the cavity. It could be lots of solid chocolate articles made over the world such as tablets in all sizes or spheres or easter rabbits or Christmas men etc. Articles with content of caramel, jam, peanut butter, fondant crème etc. When being deposited directly on the underlying belt it is typically high volume productions of chocolate "chips" and "buttons", caramel and a great variety of sugar-containing mass. Mass of chocolate with ingredients such as of nut bits, fruit bits, other masses such as caramel bits and the like is an issue as well.

However, common for all these productions all over the world is the cumbersome jobs of cleaning off the mass spillage and residue at the moulds, the belts and the production line equipment caused by long "tails" or "threads" of mass provided between the lumps of mass deposited and the nozzles of the depositing unit.

The conveyor moves the belt and the moulds fast and intermittent in-between the stages of the present and the next deposit and the "tails" or "threads" still hanging between the deposited amounts and the nozzles easily spreads all over. After a while of production, these "tails" or "threads" ends up at nearly every surface on the production line apparatus. On the outside of the nozzles, on the upper sides of the moulds, on the belts, on the depositing unit, on the rollers, gears, electrical equipment for the moulds or the belts etc.

All of these confectionery masses are far from "ideal" behavior regarding low internal friction ad high "flowability". To the contrary, the confectionery masses all exhibit different and challenging behavior in the channels and constrictions of a food production line apparatus, its depositors and nozzles. These confectionery masses are all encompassed by the group of masses having high internal friction and low flowability. Consequently, these masses easily build up internal pressure as they are forced to flow through channels in the depositors and nozzles.

So, due to the physical nature and constitution of confectionery mass there are several challenges for the manufacturers using the major production line apparatuses for continuous depositing of articles of confectionery mass. First of all, it is of the outmost importance to keep the lines running until a planned production-amount of articles is achieved. It could take hours, days or even weeks for the most popular confectionery articles. Interruption is cumbersome, time consuming and cost a lot of expenses.

A first problem to be solved by the present invention is to provide a production line apparatus for continuous depositing of a confectionery mass on an underlying support, a process for controlling the depositing of the mass, a depositor to be used in the production line, a nozzle as spare parts for the depositor and production line as well as use of the inventive production line for chocolate mass, nougat mass, caramel mass, peanut butter mass, jam mass, crème mass, fondant mass and confectionery mass with ingredients, so that it is avoided, that each time the particular amounts of the confectionery mass is deposited, long "tails" or "threads" of mass are provided between the lumps of mass deposited and the nozzles of the depositing unit. Such "tails" contaminates the underlying support, the belts or moulds for the deposited articles and parts of the production equipment as well.

This problem is especially pertinent because of the wide use of Lecithin in chocolate recipes at manufacturers around the world, acting as a functional and efficient component for adjusting flow properties and reducing fat content in the chocolate mass. The chocolate recipe has low viscosity without the Lecithin ingredient, and "tails" or "threads" of mass are not experienced when the mass is deposited.

However, the addition of Lecithin as ingredient to the chocolate recipe, typically applied in amounts of 0,4-0,5%, provides the so-called "thickening effect" of the mass, as it is named by the manufacturers. With the "thickening effect" follows a raise in the "yield value" of the mass, which means that the mass provides "threads" and "tails" when being deposited using traditional depositing nozzles..

When the at least one volumetric displacement unit comprises a plurality of pistons arranged above to the side or above the distribution block, which pistons have sliding surfaces supported by associated stationery surfaces at the mass depositing unit, a second problem to solve is to improve the continuous production and depositing of sugar containing confectionery mass. The high-viscous sugar-containing mass such as caramel mass, nougat mass, peanut butter mass or jam mass sticks to all surfaces in the production equipment and especially the channels and pistons in the depositors and mass pumps, which increases the necessary pressure to be applied to the mass with up to several bars and the concomitant friction between moving parts. The high pressure itself provides for mass sieving into gaps between pistons and sliding surfaces of guide seats. After a certain production period the contamination of the thick mass in between the pistons and their sliding surfaces of the depositor is often so intense, that the friction is so high that production must be interrupted and the equipment be cleaned.

The mass is often more or less "burned" to the surfaces.

A further problem to be solved by the inventive solution is, that the often applied water greasing of pistons and movable parts of the depositors and pumps is necessary for the thick, high-viscous and sugar high mass not to stick and " burn" as glued to sliding surfaces. However, the water greasing often contaminates the mass with risk of lowering the product value by causing fermenting of the mass and cracks and generally lower shelf-life of the mass products.

When handling low- or medium viscous confectionery mass, the pressure in the depositor is typically in the range of up to 2 bars. However, when handling high-viscous mass the pressure is in the range of 2-5 bar, often in the higher end.

An even further problem to be solved by the invention is the high pressure encountered in the known mass depositing units, commonly called "depositors", especially when handling high-viscous mass such as mass having high fat and sugar-content. The high pressure enhances the mass being pressed in between sliding surfaces of the pistons and the associated stationery surfaces in the depositors, so that the above mentioned drawbacks of mass "sticking" and "burning" to sliding surfaces of pistons and their opposite support surfaces prevail.

An even further problem is the use of closure-plates at the bottom of the known depositors for mass having inclusions. Many chocolate articles have content of inclusions such as nut pieces, fruit bits, or the like. The closure-plates at the bottom of the known depositors are necessary for the chocolate having ingredients not to sieve out in between being deposited. However, the closure-plates is causing a lot of unwanted greasing of the surroundings with mass and ingredients as well as production interruptions due to necessary cleaning and maintenance of these parts.

The inventive solution is characterized in, that the inner nozzle channel of each nozzle comprises an inlet opening and an outlet opening for the mass, an upper conical channel part extending from the inlet opening and narrowing in towards a central waist part, and a lower conical channel part expanding from the central waist part towards the outlet opening at the bottom of the nozzle.

With the inventive apparatus solution for controlling depositing of confectionery mass from a mass depositing unit on an underlaying support is the collective mass in a chamber divided into a plurality of streams when leaving the chamber, each of which individual streams are pressurized and subsequently released again when each mass stream departures from the depositing unit towards the underlying support.

With the inventive production line apparatus, depositor, nozzles, and use is the mass in each individual stream during its passage through the inner channel of each particular nozzle allready pressurized by the depositor when flowing from the inlet opening down through the upper conical part narrowing in to the central waist part. Passing through the waist part, the mass is subsequently being relieved in pressure when flowing on through the lower conical channel part expanding towards the outlet opening of the nozzle. The pressure of the mass is then relieved completely at the outlet opening of the nozzle. Surprisingly, "threads" or "tails" between the nozzles and the mass are remarkably reduced and, in some cases, eliminated completely. Spillage of mass to the surroundings are thereby also remarkably reduced or even eliminated.

As the mass pressure is build up during depositing of the accurate amounts of mass for the particular article, the mass in the mass chamber of the depositor unit and in the volumetric displacement unit is left without pressure in-between the steps of depositing mass amounts. Pressure build-up is then reduced to the short periods of a few seconds it takes for amounts of mass to pass through to the central waist part of the nozzles. During these periods the pressure in the mass are reduced in comparison with the prior art when depositing the high viscous and difficult sugar containing confectionery masses.

When the central waist part has constant diameter and the length of the central waist part is less than the diameter of the waist part and is greater than 0 mm, the reduction in internal mass pressure in the depositor during deposition is especially effective. Depositing standard BC dark chocolate mass with an Aasted depositor simultaneously through prior art nozzles and through the inventive solution revealed a reduction of up to 70% in internal mass pressure in the depositor for the inventive solution.

The pressure relief in the inner parts of the depositor unit eliminates mass being pressed in between sliding surfaces of pistons and rotary valves and their stationery supporting surfaces at the depositor. This is especially advantageous when depositing high viscosity confectionery mass with sugar content as no "burning" or "gluing" of mass to the surfaces are observed with the inventive apparatus.

The traditionally applied "water" greasing of the sliding surfaces of the pistons of the depositor unit by the prior art production line apparatuses are simply omitted and no risk of contamination of articles with water are present with the inventive solution.

During different productions with common different dark and milk chocolate masses, which are indeed low viscous in comparison to the sugar-containing masses, no dripping or "tails" of mass were observed as by the prior art between the deposited mass amounts and the nozzles.

The inventive production line apparatus has proven to perform highly satisfactory with a huge variety of confectionery masses, whether it be low or high viscosity mass or mass with severe content of sugar. In all productions the dripping and "tails" of mass are eliminated, the sticking and "burning" of mass to sliding surfaces of pistons and rotary valves of the depositor unit is not present any longer, water greasing and risk of contamination of the mass is eliminated and furthermore is the accuracy of the weight amount of the deposited mass lumps highly accurate and satisfactory to the manufacturers.

The effectively reduced internal mass pressure in the depositor unit makes it possible to add the further process stage, that when the amount of mass is deposited, the pumping of the mass by the volumetric displacement unit is reversed and then stopped. The return suction is applicable for all kinds of the confectionery mass types. However, it is a great advantage that the prior so-called" tail-knifes" or "closure-plates" can be omitted with the inventive solution. The mass types such as chocolate with inclusions that required such plates with the prior art apparatuses are now fully in control as being maintained in the nozzles without spillage by the return suction in-between the stages of being deposited.

When according to an embodiment, the central waist part has constant diameter, and is arranged within a range of up to +/- 25% of the complete channel length from the middle between the inlet opening and the outlet opening, the performance of the production line and depositor covers any type and recept of confectionery mass and the nozzles are simple and easy to manufacture as well.

Advantageously, the diameter of the waist is between 10% and 90% of the diameter of the inlet opening, so that when desirable for the particular purpose and mass-viscosity, the pressure in the mass rises the lesser the diameter of the waist is designed.

The diameter of the outlet opening is between 75% and 500% of the diameter of the inlet opening. Then the complete broad range of confectionery mass is covered, from low viscosity to high-viscosity, with low or with high content of sugar, with inclusions or with two layers deposited by one-shot nozzles. Chocolate mass, nougat mass, peanut butter, jam mass, caramel mass, crème mass or fondant mass, just to mention some.

Advantageously, the cone angles of the upper conical channel part and of the lower conical channel part, are both between 5° and 75°. Then, the nozzles are easy to manufacture, and the effect of the pressure rise and subsequent relieve is achieved.

With another embodiment the diameter of the outlet opening of the nozzles are equal to or greater than the diameter of the inlet opening. It is then safe that the pressure of the mass is relieved completely at the outlet opening. When the diameter of the outlet opening is greater than of the inlet opening, the lowest part of the conical outlet channel acts as a kind of screen or skirt ensuring that the mass and especially low-viscosity mass is maintained inside the nozzle. This is especially advantageous when the mass is deposited directly on an underlaying belt, such as when producing chips, chunks and the like.

An expedient manner of providing such embodiment is when the cone angle of the lower conical channel part is equal to or greater than the cone angle of the upper conical channel part. Then it has proven to be especially effective for all kinds of mass when the amount of mass has been deposited, the pumping of the mass by the volumetric displacement unit is reversed and then stopped. Then the mass simply is maintained with a surface tension in lower channel parts of the nozzles. Further, the conical outlet of the nozzle provides an enlarged surface area to which the residue mass can adhere to, compared to previous art nozzles. This has proven to be very effectively maintained such without spillage until next depositing step is to be performed

With a further embodiment, the diameter of the outlet opening is lesser than the diameter of the inlet opening. An expedient manner of providing that embodiment is to manufacture the cone angle of the lower conical channel part so that it is lesser than the cone angle of the upper conical channel part.

When depositing confectionery mass with inclusions, such as chocolate mass with bits of nuts or the like, this embodiment has proven to maintain the mass with inclusions in the nozzle between the stage of depositing mass without the appliance of the traditionally closure plates at the end of the nozzles. In combination with the process of reversing the volumetric displacement unit after having deposited the amount of mass, the mass is safely kept in the nozzles without spillage on the underlaying moulds or belt.

The embodiment has also proven to be successful when a ring-shaped inlet for a secondary mass is arranged concentrically around the waist part of the inventive nozzles as being used for the "One-shot" process. The concentrically nozzle part may advantageously also be constructed according to the inventive solution.

The invention is explained further below under reference to preferred embodiments as well as the drawing, in which
fig. 1 is a schematic view of the food production line apparatus according to the invention, seen from the side,
fig. 2 is a mass depositor unit from the production line of fig. 1, seen in detailed, enlarged view,
fig. 3 is a vertical section a-a as disclosed in fig. 5 through the central part of the depositor unit of fig. 2, seen in further detailed view filled with chocolate mass,
fig. 4 is a vertical section a-a as disclosed in fig. 5 , seen in detailed view of the plate-shaped mass distribution block with inventive nozzles from the depositor unit of fig. 3 as well as with underlaying chocolate moulds,
fig. 5 is the same as in figure 4, seen in a perspective view,
fig. 6 is one of the nozzles from the depositor unit of fig. 3, seen in enlarged view,
fig. 7 a-c is part of the distribution block of fig. 4 with the nozzle of fig. 6, seen in the steps of depositing an amount of chocolate mass as "chips" or "buttons" on the underlaying steel belt,
fig. 8 is another embodiment of a nozzle from the depositor unit of fig. 3, seen in enlarged view,
fig. 9 a-c is part of the distribution block of fig. 4 with the nozzle of fig. 8, seen in steps of depositing an amount of confectionery mass into an underlaying mould cavity,
fig. 10 is a further embodiment of a nozzle from the depositor unit of fig. 3, seen in enlarged view, and
fig. 11 a-c is part of the distribution block of fig. 4 with the nozzle of fig. 10, seen in steps of depositing an amount of chocolate mass with inclusions as nuts bits into an underlaying mould cavity.

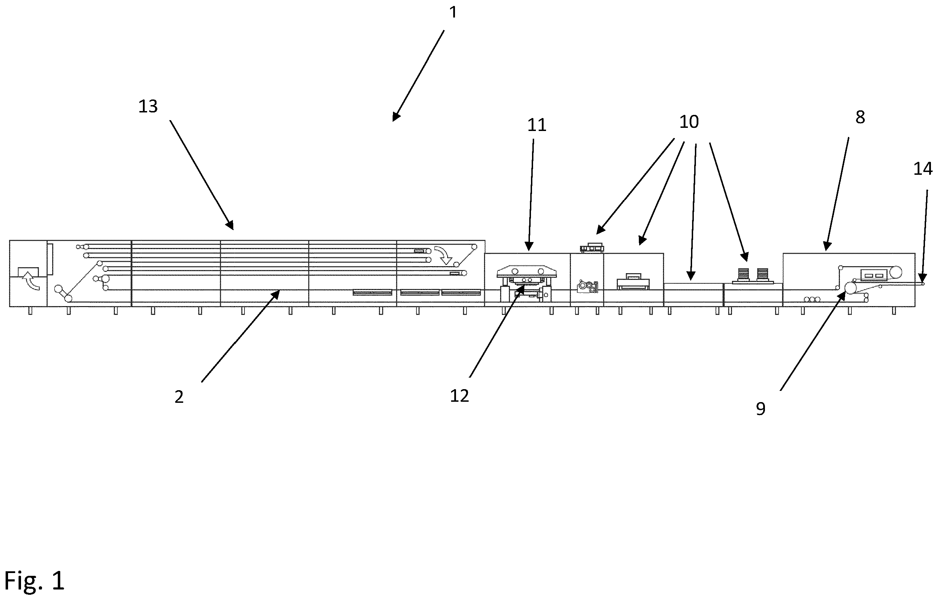

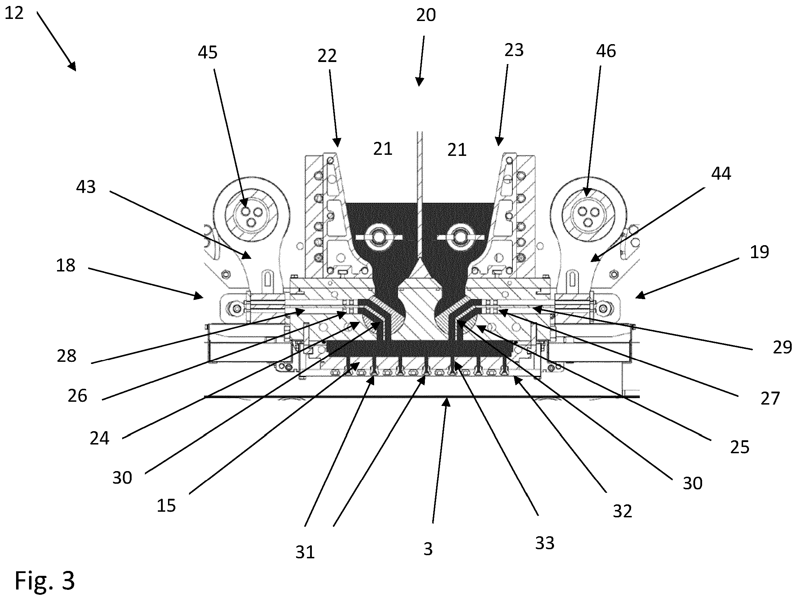

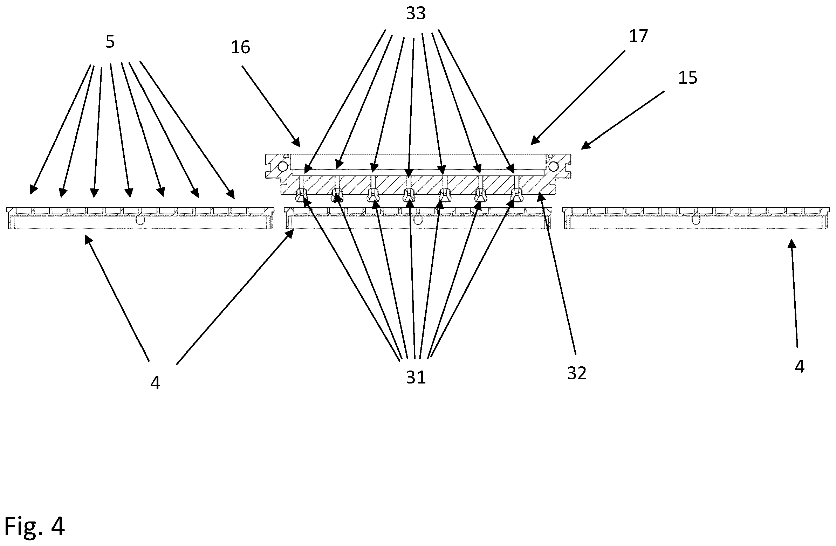

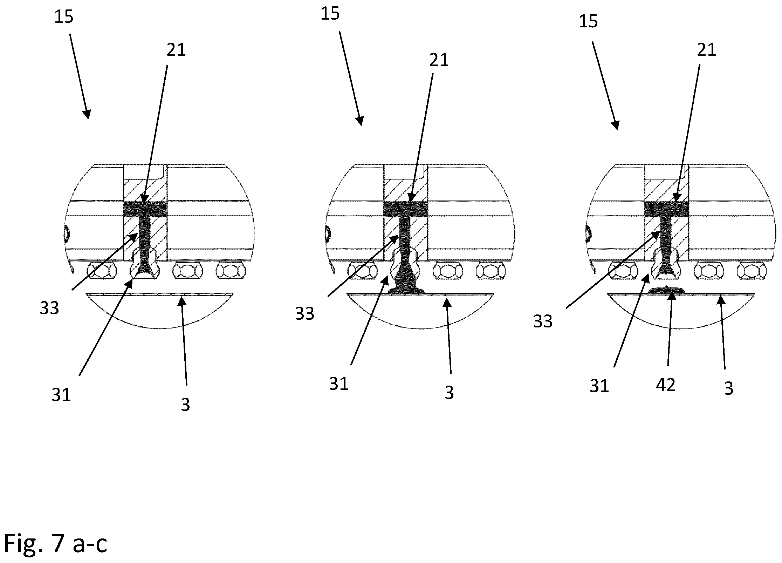

The inventive food production line apparatus 1 disclosed in figure 1 is adapted for continuous depositing of a confectionery mass such as any type of tempered chocolate mass, crème mass, jam mass, caramel, nougat mass or other types of confectionery mass having high content of fat and sugar, on an underlaying support 2 schematically disclosed in figure 1. The underlaying support 2 comprises either a plastic or a steel belt 3 as disclosed in figures 3 and 7 a-c or a plurality of mould plates 4 having cavities 5, 6 or 7 as disclosed in figures 4, 5, 9 a-c, 11 a-c and 13 ac.

The production line apparatus 1 is build-up of separate modular process elements which are built together according to the particular confectionery product to be made. The apparatus 1 comprises a conveyor module 8, having well-known gears and motors and tensioning elements for controlling the conveyor 9 of the apparatus. The conveyor 9 runs forth and back through the apparatus 1 and constitutes of well-known technology adapted to carry and control the belt 3 or the moulds 4 during their movements through the apparatus line 1. The apparatus 1 also comprises different process modules 10, which may carry equipment such as a mould stacker, mould or belt heater, belt-scraper or mould cleaner or any known modules in front of the depositing module 11, which comprises the inventive depositor unit 12. After the depositing module 11 follows a cooling module 13 in which the conveyor 9 transports the belt 3 or the moulds 4 with deposited mass articles forth and back until they are transported in solidified state from left to right at the bottom of the apparatus line 1 into the conveyor module 8 and is scraped off the belt or de-moulded from the mould cavities onto a belt 14 leading the articles further on to be wrapped and shipped.

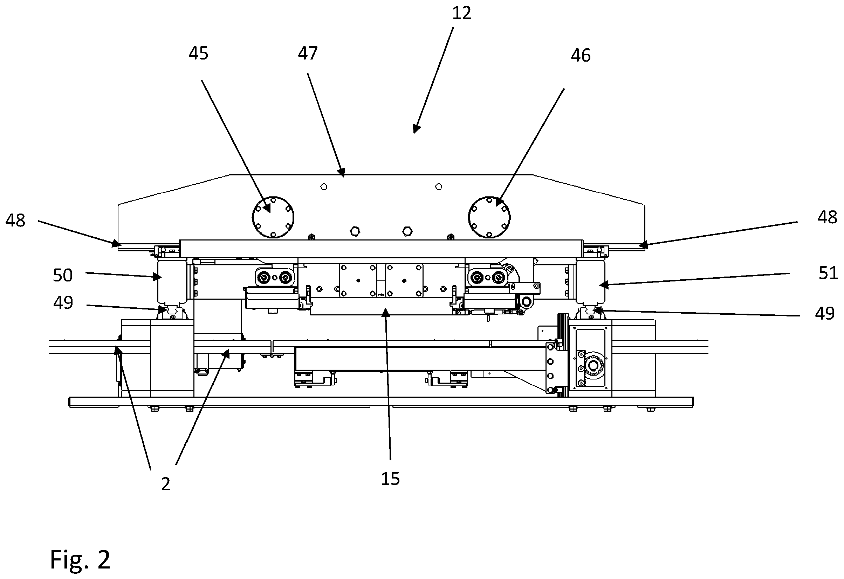

The depositor unit 12 depicted in more detail in figures 2 and 3 is part of the inventive solution of the apparatus 1 and is furthermore inventive itself. The depositor unit 12 has, as part of the inventive solution, a horizontally extending, plate-shaped mass distribution block 15 arranged above the underlaying support 2 of a belt 3 or of moulds 4.

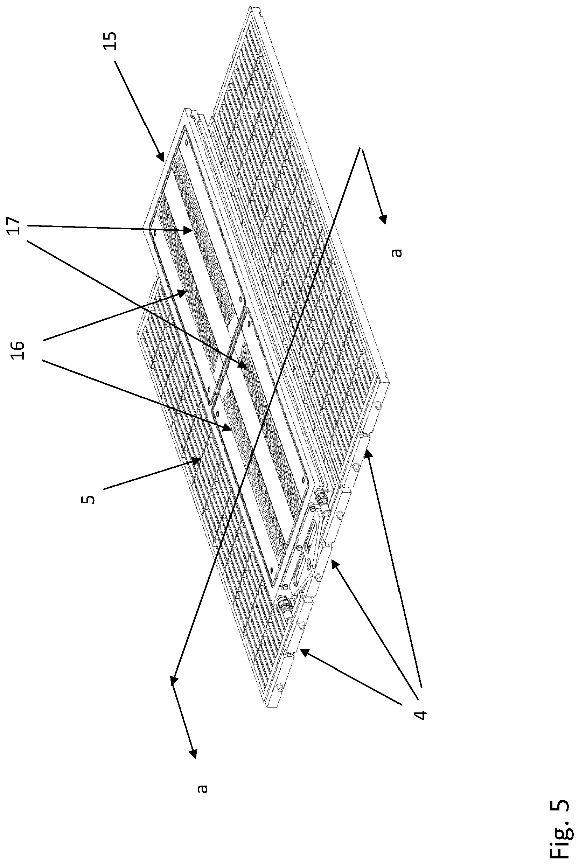

The distribution block 15 has two pairs of mass chambers 16, 17 arranged inside the block as disclosed in fig. 5. The chambers 16, 17 are connected via two volumetric mass displacement units 18, 19 with a storage 20 of confectionery mass 21 to be deposited. The storage 20 comprises a construction of two mirrored funnels or troughs 22 extending in the full width of the belt 3 or of the moulds 4, fig. 3. Under the troughs 22, 23 are arranged common rotary valves 24, 25, and extending to the sides, rows of common pistons 26, 27 maintained in cylindrical bores 28, 29. The movements of the rotary valves 24, 25 and of the rows of pistons 26, 27 are controlled by common non-disclosed gear motors and computers such as HMI. At fig. 3 the mass displacement units 18, 19 are disclosed in a position just having ended a depositing step. From the disclosed position and before each new deposit, the rotary valves 24, 25 are turned, so that their channels 30 connects the troughs 22, 23 with the bores 28, 29, respectively. By the retraction of the rows of pistons 26, 27 in the bores 28, 29 the appropriate amount of mass is sucked into each bore 28, 29, so that the depositor unit 12 is ready for depositing the next amount of mass.

Rows of nozzles 31 are arranged at the bottom 32 of the mass distribution block 15 and each nozzle 31 is connected to a mass chamber 16, 17 via a respective channel 33. Each nozzle 31 has a through extending inner nozzle channel 34.

The inner nozzle channel 34 of each nozzle 31 has an inlet opening 35 and an outlet opening 36. The inner channel 34 further comprises an upper conical channel part 37 extending from the inlet opening 35 and narrowing in towards a central waist part 38, as well as a lower conical channel part 39 expanding from the central waist part 38 and towards the outlet opening 36 at the bottom of the nozzle 31. The nozzles 31 has an outer thread 40 for easy fitting to the bottom 32 of the mass distribution block 15.

The inventive embodiment of the nozzles 31 disclosed at figures 3-7 has a cone angle of 15° for the upper conical channel part 37 and a cone angle of 50° for the lower conical channel part 39. The central waist part 38 has constant diameter dw, and is arranged within a range of up to +/- 25% of the complete channel length L from the middle M between the inlet opening 35 and the outlet opening 36. The size of the diameter d of the inlet opening could for example be 7 mm and the other dimensions of the nozzle is adapted out from that dimension. Then, the diameter of the waist 38, dw is 5 mm and the diameter D of the outlet opening 36 is 16 mm, and the length L of the channel is 24 mm. As the diameter D of the outlet opening 36 is greater than the diameter d of the inlet opening 35, is created a "skirt" part of the lower conical channel part 39 having a length S. The diameter of the skirt part 41 is greater than d all the way of the length S. The length Iw of the central waist part 38 is 4 mm and is then advantageously shorter than the diameter of the central waist part 38.

The nozzle 31 is advantageously used for any type of confectionery mass, whether it is low-viscosity or high-viscosity mass or which sugar content it may have. The nozzle 31 may for example be used to deposit mass such as chocolate mass or fillings directly in cavities 5 in moulds 5, as dislosed in figures 4 and 5. However, it is especially advantageous for depositing low-viscosity mass such as chocolate mass directly onto an underlaying belt 3 as disclosed schematically in figures 3 and 7 a-c. At the end of the former deposit, the depositor 12 effected that the rows of pistons 26, 27 were reversed and then stopped. The chocolate mass is then left in the lower conical channel part 39 with a concave surface tension as disclosed in figure 7 a. The mass is effectively maintained from sipping or dripping onto the steel belt 3. When very low-viscosity mass is deposited, such as chocolate mass being deposited for small diameter "chips" on a belt, such mass may often have difficulties in providing the mentioned concave surface tension. It is then advantageous to make at least the cone angle of the lower conical channel part 39 smaller such as in the range of 20-30°. The cone angle of the upper conical channel part 37 should then be 5-15° smaller. The low-viscous chocolate mass will then easily build up the desired surface tension in the skirt and consequently the surroundings are maintained clean from spillage and drip.

In the next step is disclosed that the chocolate mass is deposited onto the belt 3, fig. 7b. During its passage through the inner channel 34 of each particular nozzle 31 the pressurized mass is flowing from the inlet opening 35 down through the upper conical part 37 narrowing in towards the central waist part 38, creating an increase in mass velocity. Having passed through the waist part 38, the mass is subsequently being relieved in velocity when flowing on through the lower conical channel part 39, and reaches the inlet velocity 35 at the point of the expanding lower channel 39 where the diameter d is the same as at the inlet opening. The mass then enters the lower "skirt" part with the length S. The skirt part maintains the mass in a more or less "pressure-less" state inside the nozzle until it reaches the outlet opening 36 of the nozzle 31. The skirt provides a transition length "S" before the mass leaves the nozzle outlet opening 36. When having left the nozzles the mass makes no "threads" or "tails" between the nozzles and the deposited amount, such as the chocolate chips, chunk or button 42 on the belt 3. Spillage of mass to the surroundings are thereby eliminated.

The embodiment having the "skirt" part is especially advantageous when the depositor is laid out for high-capacity production such as for example 2000kg of articles pro hour. The troughs 22, 23, the volumetric displacement unit 18, 19 and the mass distribution block 15 are carried by pendulum suspensions via pendulum arms 43, 44 joined to shafts 45, 46, which are maintained by a frame 47. The frame 47 is carried by tracks 48, 49 in engagement with servo motors 50, 51.

The frame is then controlled so that the troughs 22, 23 and the distribution block 15 has an oscillating movement during each deposit. It could for example be 30 strokes per minute. It means that the distribution block 15 follows the underlaying belt 3 or moulds 4 with the same speed during depositing. Thereafter the troughs 22, 23 and the distribution block 15 retracts with high speed against the moving direction of the belt 3 or moulds 4. During that retraction the "skirt"s of the nozzles maintains the mass safely in the nozzles and protects against spillage of mass over the surroundings. Especially when handling low-viscosity mass this is favorable.

As the mass pressure is build up during depositing of the accurate amounts of mass for the article 42. The mass in the mass chamber 16, 17 of the depositor unit 12 and in the bores 28, 29 of the pistons 26, 27 is left without pressure in-between the steps of depositing mass amounts. Pressure build-up is then reduced to the short periods of a few seconds it takes for the pistons to displace the measured amounts of mass. During these periods the pressure in the mass is reduced up to 70% in comparison with the prior art when depositing the high viscous and difficult sugar containing confectionery masses.

The pressure relief in the inner parts of the depositor 12 eliminates mass being pressed in between sliding surfaces of pistons 26, 27 and rotary valves 24, 25 and their stationery supporting surfaces 28, 29 at the depositor 12. This is especially advantageous when depositing confectionery mass with sugar content as no "burning" or "gluing" of mass to the surfaces are observed with the inventive apparatus.

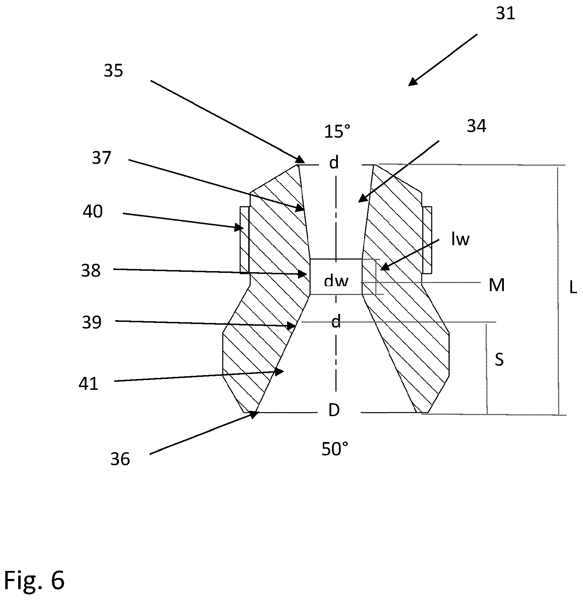

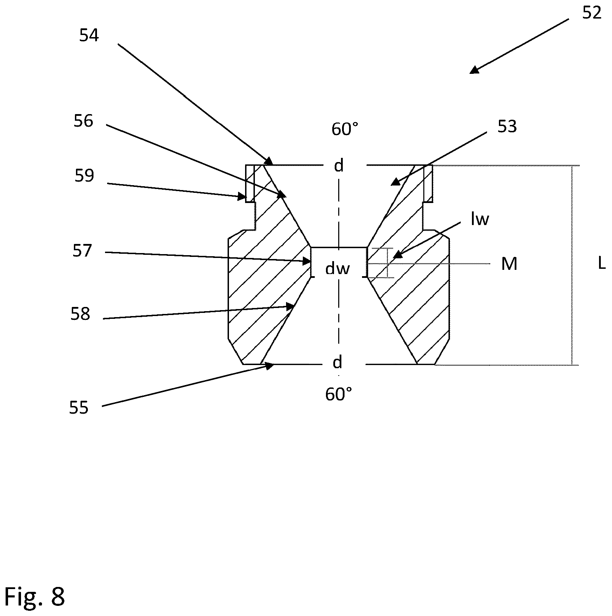

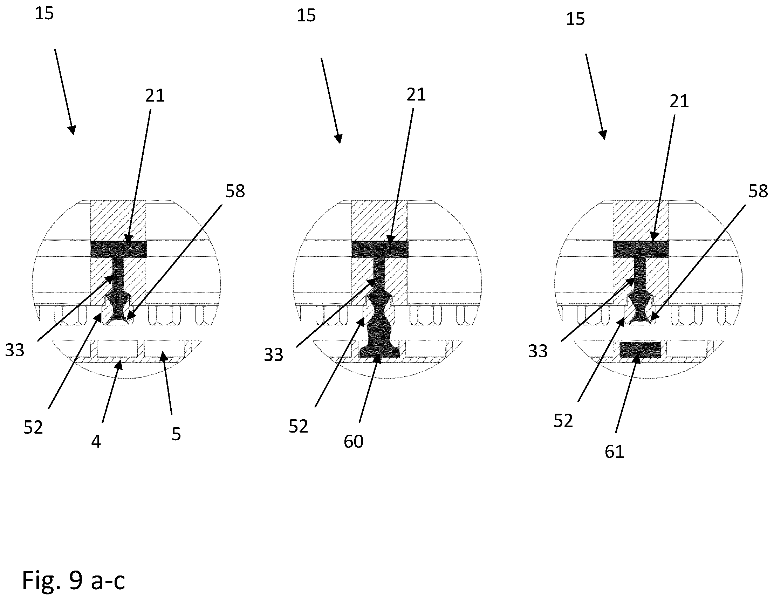

The further inventive embodiment of the nozzles 52 disclosed in figures 8, 9 a-c is symmetrical around the middle M. The inner nozzle channel 53 comprises an inlet opening 54 and an outlet opening 55 having the same diameter d. In the middle between the openings are arranged the waist part 57. The upper conical nozzle channel 56 and the lower conical nozzle channel 58 both have cone angles of 60°. Due to the cone angles of 60° the diameter dw of the waist part is typically reduced to 30-35% of the inlet diameter d for a standard length L of 25-30 mm for nozzles used in chocolate and fillings production lines. The circular flow area of the width of the waist 57 is, however, reduced to around 10% of the circular flow areas of the inlet and outlet openings 35, 36. The increase in mass velocity and the following reduction in the chocolate or fillings mass passing through the reduced flow area at the middle M are then much better in the nozzles 52 than in the nozzles having lower cone angles. This higher pressure in combination with the great angles of 50-70% ensures a reliable spreading of the mass 60 deposited directly into cavities 5 in moulds 4, fig. 9 b. The prolonging of the "skirt" S as by the nozzles 31 of figs. 6, 7a-c are then not necessary as it is advantageous to maintain the nozzles 52 close to the cavities 5 during all stages of the depositing and moulding of the chocolate article 61.

Furthermore, the greater angle of 60° of the lower cone part 58 makes it easier for the mass to build up the concave surface tension in the lower conical channel part 58 as disclosed at figures 9 a and c.

The length lw of the central waist part 57 is advantageously shorter than the diameter dw of the central waist part 57. This further reduces the pressure-build up in the depositor.

As with the nozzle 31 pressure build-up in the depositor is also reduced to the short periods of a few seconds it takes for the pistons to displace the measures amounts of mass. During these periods the pressure in the mass are reduced up to 70% in comparison with the prior art when depositing the high viscous and difficult sugar containing confectionery masses. The much lowered pressure provides for a substantial pressure relief in the inner parts of the depositor 12 eliminating mass being pressed in between sliding surfaces of pistons 26, 27 and rotary valves 24, 25 and their stationery supporting surfaces 28, 29 at the depositor 12. This is especially advantageous when depositing confectionery mass with sugar content such as nougat or different fillings or crème mass as no "burning" or "gluing" of mass to the surfaces are observed with the inventive apparatus, depositor and nozzles.

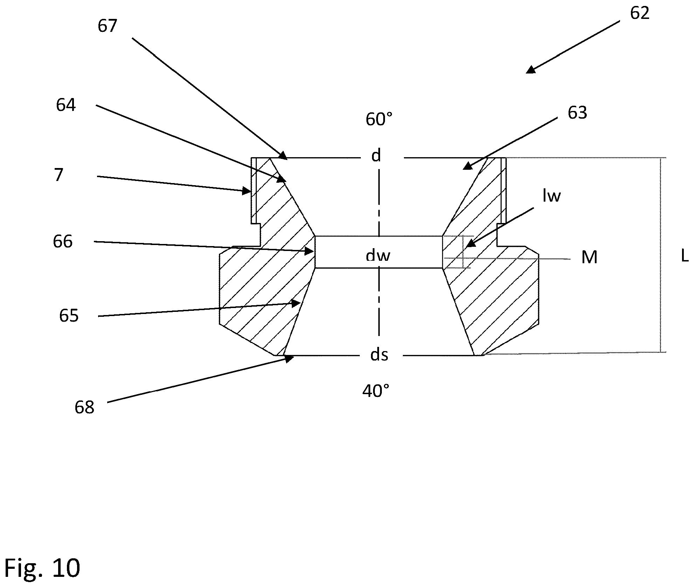

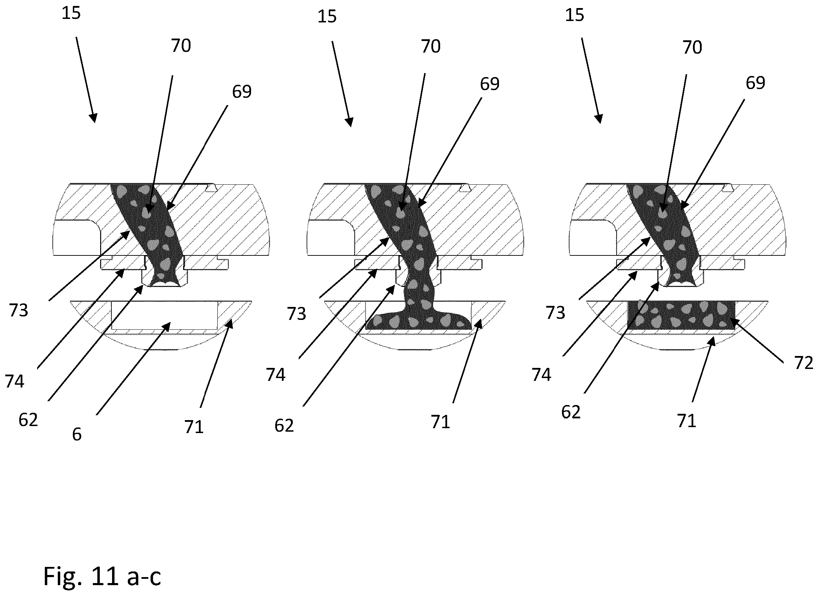

The third inventive embodiment of the nozzles 62 disclosed at figures 10-11 a-c has an inner channel 63 having a cone angle of 60° for the upper conical channel part 64 and a cone angle of 40° for the lower conical channel part 65. The central waist part 66 has constant diameter dw, and is arranged a few millimeters from the middle M between the inlet opening 67 and the outlet opening 68 of the complete channel length L.

The size of the diameter d of the inlet opening 67 could for example be 24 mm, the diameter dw of the waist part 66, is 14 mm and the diameter ds of the outlet opening 68 is 21 mm, and the overall length L of the channel is 22 mm. The length Iw of the waist part 66 is 3,5 mm which is much smaller than the size of the diameter of the waist part 66 enhancing the pressure relief in the depositor during depositing of mass. As the diameter D of the outlet opening 68 is smaller than the diameter d of the inlet opening 67, is maintained a slight pressure effect in the mass towards the outlet opening 68, when the mass 69 has a content of inclusions 70. Thereby is provided a concave surface tension and a surprising tightening effect for a mass with inclusions, so that the mass and inclusions 70 doesn't sieve out from the nozzles 62 in-between being deposited into the cavities 6 of the plastic moulds 71 moulding the chocolate articles 72 with nut bits 70. The traditionally applied "tail-cutting" knife plates arranged below the nozzles are thereby superfluous and have been replaced by mounting plates 74 into which the nozzles 62 are mounted by thread 7 engagement below the mass channels 73 in the distribution block 15.

The nozzle 62 is advantageous for depositing confectionery mass with inclusions 70, such as chocolate mass with a content of inclusions.

The new inventive nozzle solution may also be used for the One-Shot depositing process. The cone angles of the upper and lower conical channel parts of the inner nozzle channel are both in the interval of 10-40°. The cone angle of the lower part of the outer concentrical channel is also within the interval 10-40°.

The amount of center filling mass flowing through the inner nozzle channel may then be extremely high as 60% of the mount of chocolate mass in the outer concentrical channel at each deposit, which is desirable in view of chocolate savings. Furthermore, the One-shot nozzle has shown to be highly reliable in production as the inventive solution eliminates clogging of the different masses in the nozzle part where they are joined.
- 1:: food production line apparatus for confectionery mass
- 2:: underlying support
- 3:: steel belt
- 4:: plastic moulds
- 5:: cavities in moulds
- 6:: cavities in moulds
- 7:: thread on nozzle of fig. 10
- 8:: conveyor module
- 9:: conveyor
- 10:: process modules
- 11:: depositing module
- 12:: depositor
- 13:: cooling module
- 14:: belt leading to wrapping
- 15:: mass distribution block
- 16:: mass chambers
- 17:: mass chambers
- 18:: volumetric mass displacement unit
- 19:: volumetric mass displacement unit
- 20:: storage of confectionery mass
- 21:: confectionery mass
- 22:: left trough for the mass
- 23:: right trough for the mass
- 24:: rotary valve
- 25:: rotary valve
- 26:: row of pistons
- 27:: row of pistons
- 28:: bores for piston
- 29:: bores for piston
- 30:: channels in rotary valves
- 31:: nozzles
- 32:: bottom of mass distribution block
- 33:: channel in distribution block
- 34:: inner nozzle channel
- 35:: inlet opening of channel
- 36:: outlet opening of channel
- 37:: upper conical channel part
- 38:: central waist part
- 39:: lower conical channel part
- 40:: thread
- 41:: skirt part
- 42:: chips, buttons, chunks
- 43:: pendulum arm
- 44:: pendulum arm
- 45:: shaft
- 46:: shaft
- 47:: frame
- 48:: track
- 49:: track
- 50:: servo motor
- 51:: servo motor
- 52:: further embodiment of nozzle
- 53:: inner nozzle channel
- 54:: inlet opening of channel
- 55:: outlet opening of channel
- 56:: upper conical channel part
- 57:: waist part in the middle
- 58:: lower conical channel part
- 59:: thread
- 60:: moulded chocolate
- 61:: moulded chocolate article
- 62:: nozzle
- 63:: inner channel
- 64:: upper conical channel part
- 65:: lower channel part
- 66:: waist part
- 67:: inlet opening
- 68:: outlet opening
- 69:: mass
- 70:: inclusions
- 71:: plastic moulds
- 72:: moulded article with inclusions
- 73:: channel in distribution block
- 74:: mounting plate

- d:: diameter of inlet opening of nozzle
- D:: diameter of outlet opening of nozzle greater than d of inlet
- d:: diameter of outlet opening of nozzle equal to d of inlet
- ds:: diameter of outlet opening smaller than d of inlet
- S:: prolonged skirt
- dw:: diameter of waist part
- Iw:: length of waist part
- L:: length of complete channel
- M:: middle of channel length
- S:: length of skirt part

## Claims

1. Food production line apparatus (1) for continuous depositing of a confectionery mass (21) on an underlying support (2, 3, 4, 71), having
a mass depositor unit (12), and
a conveyor (9) carrying the underlaying support (2, 3, 4, 71) for receiving the deposited mass (42, 60, 61,72),
which mass depositor unit (12) has a horizontally extending, plate-shaped mass distribution block (15) arranged above the underlying support (2, 3, 4, 71) , which plate-shaped mass distribution block (15) comprises;
at least one mass chamber (16, 17) arranged inside the block (15), and which chamber (16, 17) is connected via at least one volumetric mass displacement unit (18, 19) with a storage (22, 23) of confectionery mass (21) to be deposited, that the at least one volumetric mass displacement unit (18, 19) is arranged above the mass chamber and comprises a plurality of pistons (26, 27) and one or more rotary valves, which pistons (26, 27) and rotary valves have sliding surfaces (28, 29) supported by associated stationery surfaces (28, 29) at the mass depositor unit (12), a plurality of nozzles (31, 52, 62), each being a separate unit, arranged at the bottom (32) of the mass distribution block (15) as each nozzle (31, 52, 62) is connected to the mass chamber (16, 17) via a respective channel (33, 73), and that each nozzle (31, 52, 62) is having a through extending inner nozzle channel (34, 53, 63),
**characterized in,**
**that** the inner nozzle channel (34, 53, 63) of each nozzle (31, 52, 62) comprises an inlet opening (35, 54, 67) and an outlet opening (36, 55, 68) for the mass, an upper conical channel part (37, 56, 64) extending from the inlet opening (35, 54, 67) and narrowing in towards a central waist part (38, 57, 66), and a lower conical channel part (39, 58, 65) expanding from the central waist part (38, 57, 66) towards the outlet opening (36, 55, 68) at the bottom of the nozzle (31, 52, 62) .

2. Food production apparatus (1) according to claim 1, **characterized in, that** the central waist part has constant diameter and that the length of the central waist part is less than the diameter of the waist part and is greater than 0 mm.

3. Food production line apparatus (1) according to one or more of claims 1-2, **characterized in, that** the central waist part (38, 57, 66) has constant diameter (dw), and is arranged within a range of up to +/- 25% of the complete channel length (L) from the middle (M) between the inlet opening (35, 54, 67) and the outlet opening (36, 55, 68).

4. Food production line apparatus (1) according to one or more of claims 1-3, **characterized in, that**, the diameter (dw) of the waist part (38, 57, 66) is between 10% and 90% of the diameter (d) of the inlet opening (35, 54, 67).

5. Food production line apparatus (1) according to one or more of claims 1-4, **characterized in, that**, the diameter (D) of the outlet opening (36, 55, 68) is between 75% and 500% of the diameter (d) of the inlet opening (35, 54, 67).

6. Food production line apparatus (1) according to one or more of claims 1-5, **characterized in, that** the cone angles of the upper conical channel part (37, 56, 64) and of the lower conical channel part (39, 58, 65), are both between 5° and 75°.

7. Food production line apparatus (1) according to one or more of claims 1-6, **characterized in, that** the diameter (d, D) of the outlet opening (36, 55) is equal to or greater than the diameter (d) of the inlet opening (35, 54).

8. Food production line apparatus (1) according to claim 7, **characterized in, that** the cone angle of the lower conical channel part (39, 58) is equal to or greater than the cone angle of the upper conical channel part (37, 56).

9. Food production line apparatus (1) according to one or more of claims 1-6, **characterized in, that** the diameter (ds) of the outlet opening (68) is lesser than the diameter (d) of the inlet opening (67) .

10. Food production line apparatus (1) according to claim 9, **characterized in, that** the cone angle of the lower conical channel part (65) is lesser than the cone angle of the upper conical channel part (64).

11. Food production line apparatus (1) according to one or more of claims 9, 10, **characterized in, that** a ring-shaped inlet for a secondary mass is arranged around the waist part of the nozzles.

12. Food production line apparatus (1) according to one or more of claims 1-11, **characterized in, that** the underlying support (2) comprises a plurality of mould plates (4, 71) having cavities (5, 6) into which each of the mass streams are deposited.

13. Food production line apparatus (1) according to one or more of claims 1-11, **characterized in, that** the underlying support (2) comprises a steel or plastic belt (3) onto which the mass (42) is deposited.

14. Depositor (12) to be used in food production line apparatus (1) according to one or more of claims 1-13 and having a horizontally extending, plate-shaped mass distribution block (15) arranged above the underlying support (2), which plate-shaped mass distribution block (15) comprises
at least one mass chamber (16, 17) arranged inside the block (15), and which chamber (16, 17) is connected via at least one volumetric mass displacement unit (18, 19) with a storage (20) of confectionery mass (21) to be deposited, that the at least one volumetric mass displacement unit (18, 19) is arranged above the mass chamber and comprises a plurality of pistons (26, 27) and one or more rotary valves, which pistons (26, 27) and rotary valves have sliding surfaces (28, 29) supported by associated stationery surfaces (28, 29) at the mass depositor unit (12),
a plurality of nozzles (31, 52, 62), each being a separate unit, arranged at the bottom (32) of the mass distribution block (15) as each nozzle (31, 52, 62) is connected to the mass chamber (16, 17) via a respective channel (33, 73), each nozzle (31, 52, 62) having a through extending inner nozzle channel (34, 53, 63), that the inner nozzle channel (34, 53, 63) of each nozzle (31, 52, 62) comprises an inlet opening (35, 54, 67) and an outlet opening (36, 55, 68) for the mass, an upper conical channel part (37, 56, 64) extending from the inlet opening (35, 54, 67) and narrowing in towards a central waist part (38, 57, 66) , and
a lower conical channel part (39, 58, 65) expanding from the central waist part (38, 57, 66) towards the outlet opening (36, 55, 68) at the bottom of the nozzle (31, 52, 62).

15. Depositor (12) according to claim 14, **characterized in, that** the central waist part has constant diameter, and that the length of the central waist part is less than the diameter of the waist part and is greater than 0 mm.

16. Nozzle (31, 52, 62) to be used in food production line apparatus (1) according to one or more of claims 1-13, and depositor (12) of claim 14 and having a through extending inner nozzle channel (34, 53, 63), that the inner nozzle channel (34, 53, 63) of each nozzle (31, 52, 62) comprises an inlet opening (35, 54, 67) and an outlet opening (36, 55, 68) for the mass, an upper conical channel part (37, 56, 64) extending from the inlet opening (35, 54, 67) and narrowing in towards a central waist part (38, 57, 66), and a lower conical channel part (39, 58, 65) expanding from the central waist part (38, 57, 66) towards the outlet opening (36, 55, 68) at the bottom of the nozzle (31, 52, 62), that the cone angles of the upper conical channel part (37, 56, 64) and of the lower conical channel part (39, 58, 65), are both between 5° and 75°.

17. Nozzle (31, 52, 62) according to claim 16,**characterized in, that** the central waist part has constant diameter and that the length of the central waist part is less than the diameter of the waist part and is greater than 0 mm.

18. Use of food production line apparatus (1) according to one or more of claims 1-13, or of depositor (12) according to claim 14 or 15 or of a nozzle according to claim 16 or 17 for continuous depositing of chocolate mass.

19. Use of food production line apparatus (1) according to one or more of claims 1-13, or of depositor (12) according to claim 14 or 15 or of a nozzle according to claim 16 or 17 for continuous depositing of nougat mass, caramel mass, peanut butter mass or jam mass.

20. Use of food production line apparatus (1) according to one or more of claims 1-13, or of depositor (12) according to claim 14 or 15 or of nozzle according to claim 17 or 18 for continuous depositing of creme mass or fondant mass.

21. Use of food production line apparatus (1) according to one or more of claims 1-13, 4 , or of depositor (12) according to claim 14 or 15 or of a nozzle according to claim 16 or 17 for continuous depositing of confectionery mass with inclusions.

## Patentansprüche

1. Nahrungsmittelproduktionslinienvorrichtung (1) zum kontinuierlichen Ablegen einer Süßwarenmasse (21) auf einem darunterliegenden Träger (2, 3, 4, 71), mit
einer Massenablegeeinheit (12) und
einem Förderer (9), der den darunterliegenden Träger (2, 3, 4, 71) zur Aufnahme der abgelegten Masse (42, 60, 61, 72) trägt,
wobei die Massenablegeeinheit (12) einen sich horizontal erstreckenden plattenförmigen Massenverteilungsblock (15) aufweist, der über dem darunterliegenden Träger (2, 3, 4, 71) angeordnet ist, wobei der plattenförmige Massenverteilungsblock (15) Folgendes umfasst:
mindestens eine in dem Block (15) angeordnete Massekammer (16, 17), wobei die Kammer (16, 17) über mindestens eine Volumenmassenverdrängungseinheit (18, 19) mit einem Speicher (22, 23) der abzulegenden Süßwarenmasse (21) verbunden ist, dass die mindestens eine Volumenmassenverdrängungseinheit (18, 19) oberhalb der Massekammer angeordnet ist und eine Vielzahl von Kolben (26, 27) und ein oder mehrere Drehventile umfasst, wobei die Kolben (26, 27) und Drehventile Gleitflächen (28, 29) aufweisen, die von zugeordneten stationären Flächen (28, 29) an der Massenablegeeinheit (12) gestützt werden, wobei eine Vielzahl von Düsen (31, 52, 62), die jeweils eine separate Einheit sind, am Boden (32) des Massenverteilungsblocks (15) angeordnet sind, wenn jede Düse (31, 52, 62) über einen jeweiligen Kanal (33, 73) mit der Massekammer (16, 17) verbunden ist, und dass jede Düse (31, 52, 62) einen sich durch sie erstreckenden inneren Düsenkanal (34, 53, 63) aufweist,
**dadurch gekennzeichnet,**
**dass** der innere Düsenkanal (34, 53, 63) jeder Düse (31, 52, 62) eine Einlassöffnung (35, 54, 67) und eine Auslassöffnung (36, 55, 68) für die Masse umfasst, wobei sich ein oberer konischer Kanalteil (37, 56, 64) von der Einlassöffnung (35, 54, 67) erstreckt und sich zu einem mittleren Einschnürungsteil (38, 57, 66) hin verjüngt und sich ein unterer konischer Kanalteil (39, 58, 65) von dem mittleren Einschnürungsteil (38, 57, 66) zu der Auslassöffnung (36, 55, 68) am Boden der Düse (31, 52, 62) hin erweitert.

2. Nahrungsmittelproduktionsvorrichtung (1) nach Anspruch 1, **dadurch gekennzeichnet, dass** der mittlere Einschnürungsteil einen konstanten Durchmesser aufweist und dass die Länge des mittleren Einschnürungsteils kleiner als der Durchmesser des Einschnürungsteils und größer als 0 mm ist.

3. Nahrungsmittelproduktionslinienvorrichtung (1) nach einem oder mehreren der Ansprüche 1 - 2, **dadurch gekennzeichnet, dass** der mittlere Einschnürungsteil (38, 57, 66) einen konstanten Durchmesser (dw) aufweist und in einem Bereich von bis zu +/- 25 % der gesamten Kanallänge (L) von der Mitte (M) zwischen der Einlassöffnung (35, 54, 67) und der Auslassöffnung (36, 55, 68) angeordnet ist.

4. Nahrungsmittelproduktionslinienvorrichtung (1) nach einem oder mehreren der Ansprüche 1 - 3, **dadurch gekennzeichnet, dass** der Durchmesser (dw) des Einschnürungsteils (38, 57, 66) zwischen 10 % und 90 % des Durchmessers (d) der Einlassöffnung (35, 54, 67) beträgt.

5. Nahrungsmittelproduktionslinienvorrichtung (1) nach einem oder mehreren der Ansprüche 1 - 4, **dadurch gekennzeichnet, dass** der Durchmesser (D) der Auslassöffnung (36, 55, 68) zwischen 75 % und 500 % des Durchmessers (d) der Einlassöffnung (35, 54, 67) beträgt.

6. Nahrungsmittelproduktionslinienvorrichtung (1) nach einem oder mehreren der Ansprüche 1 - 5, **dadurch gekennzeichnet, dass** die Konuswinkel des oberen konischen Kanalteils (37, 56, 64) und des unteren konischen Kanalteils (39, 58, 65) beide zwischen 5° und 75° liegen.

7. Nahrungsmittelproduktionslinienvorrichtung (1) nach einem oder mehreren der Ansprüche 1 - 6, **dadurch gekennzeichnet, dass** der Durchmesser (d, D) der Auslassöffnung (36, 55) gleich dem oder größer als der Durchmesser (d) der Einlassöffnung (35, 54) ist.

8. Nahrungsmittelproduktionslinienvorrichtung (1) nach Anspruch 7, **dadurch gekennzeichnet, dass** der Konuswinkel des unteren konischen Kanalteils (39, 58) gleich dem oder größer als der Konuswinkel des oberen konischen Kanalteils (37, 56) ist.

9. Nahrungsmittelproduktionslinienvorrichtung (1) nach einem oder mehreren der Ansprüche 1 - 6, **dadurch gekennzeichnet, dass** der Durchmesser (ds) der Auslassöffnung (68) kleiner als der Durchmesser (d) der Einlassöffnung (67) ist.

10. Nahrungsmittelproduktionslinienvorrichtung (1) nach Anspruch 9, **dadurch gekennzeichnet, dass** der Konuswinkel des unteren konischen Kanalteils (65) kleiner als der Konuswinkel des oberen konischen Kanalteils (64) ist.

11. Nahrungsmittelproduktionslinienvorrichtung (1) nach einem oder mehreren der Ansprüche 9, 10, **dadurch gekennzeichnet, dass** ein ringförmiger Einlass für eine Sekundärmasse um den Einschnürungsteil der Düsen herum angeordnet ist.

12. Nahrungsmittelproduktionslinienvorrichtung (1) nach einem oder mehreren der Ansprüche 1 - 11, **dadurch gekennzeichnet, dass** der darunterliegende Träger (2) eine Vielzahl von Formplatten (4, 71) mit Hohlräumen (5, 6) umfasst, in die jeder der Massenströme abgelegt wird.

13. Nahrungsmittelproduktionslinienvorrichtung (1) nach einem oder mehreren der Ansprüche 1 - 11, **dadurch gekennzeichnet, dass** der darunterliegende Träger (2) ein Stahl- oder Kunststoffband (3) umfasst, auf das die Masse (42) abgelegt wird.

14. Ablegevorrichtung (12) zur Verwendung in einer Nahrungsmittelproduktionslinienvorrichtung (1) nach einem oder mehreren der Ansprüche 1 - 13 und mit einem horizontal verlaufenden, plattenförmigen Massenverteilungsblock (15), der oberhalb des darunterliegenden Trägers (2) angeordnet ist, wobei der plattenförmige Massenverteilungsblock (15) mindestens eine in dem Block (15) angeordnete Massekammer (16, 17) umfasst, und wobei die Kammer (16, 17) über mindestens eine Volumenmassenverdrängungseinheit (18, 19) mit einem Speicher (20) der abzulegenden Süßwarenmasse (21) verbunden ist, dass die mindestens eine Volumenmassenverdrängungseinheit (18, 19) oberhalb der Massekammer angeordnet ist und eine Vielzahl von Kolben (26, 27) und ein oder mehrere Drehventile umfasst, wobei die Kolben (26, 27) und Drehventile Gleitflächen (28, 29) aufweisen, die von zugeordneten stationären Flächen (28, 29) an der Massenablegeeinheit (12) getragen werden,
eine Vielzahl von Düsen (31, 52, 62), die jeweils eine separate Einheit sind, die am Boden (32) des Massenverteilungsblocks (15) angeordnet sind, wenn jede Düse (31, 52, 62) über einen jeweiligen Kanal (33, 73) mit der Massekammer (16, 17) verbunden ist, wobei jede Düse (31, 52, 62) einen sich durch sie erstreckenden inneren Düsenkanal (34, 53, 63) aufweist,
dass der innere Düsenkanal (34, 53, 63) jeder Düse (31, 52, 62) eine Einlassöffnung (35, 54, 67) und eine Auslassöffnung (36, 55, 68) für die Masse aufweist, wobei sich ein oberer konischer Kanalteil (37, 56, 64) von der Einlassöffnung (35, 54, 67) erstreckt und sich zu einem mittleren Einschnürungsteil (38, 57, 66) hin verjüngt, und
sich ein unterer konischer Kanalteil (39, 58, 65) von dem mittleren Einschnürungsteil (38, 57, 66) zu der Auslassöffnung (36, 55, 68) am Boden der Düse (31, 52, 62) hin erweitert.

15. Ablegevorrichtung (12) nach Anspruch 14, **dadurch gekennzeichnet, dass** der mittlere Einschnürungsteil einen konstanten Durchmesser aufweist und dass die Länge des mittleren Einschnürungsteils kleiner als der Durchmesser des Einschnürungsteils und größer als 0 mm ist.

16. Düse (31, 52, 62) zur Verwendung in einer Nahrungsmittelproduktionslinienvorrichtung (1) nach einem oder mehreren der Ansprüche 1 - 13 und Ablegevorrichtung (12) nach Anspruch 14 mit einem sich hindurcherstreckenden inneren Düsenkanal (34, 53, 63), dass der innere Düsenkanal (34, 53, 63) jeder Düse (31, 52, 62) eine Einlassöffnung (35, 54, 67) und eine Auslassöffnung (36, 55, 68) für die Masse umfasst, wobei sich ein oberer konischer Kanalteil (37, 56, 64) von der Einlassöffnung (35, 54, 67) erstreckt und sich zu einem mittleren Einschnürungsteil (38, 57, 66) hin verjüngt und sich ein unterer konischer Kanalteil (39, 58, 65) von dem mittleren Einschnürungsteil (38, 57, 66) zu der Auslassöffnung (36, 55, 68) am Boden der Düse (31, 52, 62) hin erweitert, dass die Konuswinkel des oberen konischen Kanalteils (37, 56, 64) und des unteren konischen Kanalteils (39, 58, 65) beide zwischen 5° und 75° liegen.

17. Düse (31, 52, 62) nach Anspruch 16, **dadurch gekennzeichnet, dass** der mittlere Einschnürungsteil einen konstanten Durchmesser aufweist und dass die Länge des mittleren Einschnürungsteils kleiner als der Durchmesser des Einschnürungsteils und größer als 0 mm ist.

18. Verwendung einer Nahrungsmittelproduktionslinienvorrichtung (1) nach einem oder mehreren der Ansprüche 1 - 13 oder einer Ablegevorrichtung (12) nach Anspruch 14 oder 15 oder einer Düse nach Anspruch 16 oder 17 zum kontinuierlichen Ablegen von Schokoladenmasse.

19. Verwendung einer Nahrungsmittelproduktionslinienvorrichtung (1) nach einem oder mehreren der Ansprüche 1 - 13 oder einer Ablegevorrichtung (12) nach Anspruch 14 oder 15 oder einer Düse nach Anspruch 16 oder 17 zum kontinuierlichen Ablegen von Nugatmasse, Karamellmasse, Erdnussbuttermasse oder Konfitürenmasse.

20. Verwendung einer Nahrungsmittelproduktionslinienvorrichtung (1) nach einem oder mehreren der Ansprüche 1 - 13 oder einer Ablegevorrichtung (12) nach Anspruch 14 oder 15 oder einer Düse nach Anspruch 17 oder 18 zum kontinuierlichen Ablegen von Crememasse oder Fondantmasse.

21. Verwendung einer Nahrungsmittelproduktionslinienvorrichtung (1) nach einem oder mehreren der Ansprüche 1 - 13 oder einer Ablegevorrichtung (12) nach Anspruch 14 oder 15 oder einer Düse nach Anspruch 16 oder 17 zum kontinuierlichen Ablegen von Süßwarenmasse mit Einschlüssen.

## Revendications

1. Appareil de chaîne de production alimentaire (1) pour dépôt continu d'une masse de confiserie (21) sur un support sous-jacent (2, 3, 4, 71), ayant
une unité déposeuse de masse (12), et
un convoyeur (9) transportant le support sous-jacent (2, 3, 4, 71) destiné à recevoir la masse déposée (42, 60, 61, 72),
laquelle unité déposeuse de masse (12) a un bloc de distribution de masse en forme de plaque (15) s'étendant horizontalement, agencé au-dessus du support sous-jacent (2, 3, 4, 71), lequel bloc de distribution de masse en forme de plaque (15) comprend :
au moins une chambre de masse (16, 17) agencée à l'intérieur du bloc (15), et laquelle chambre (16, 17) est raccordée par l'intermédiaire d'au moins une unité de déplacement de masse volumétrique (18, 19) à un stockage (22, 23) de la masse de confiserie (21) destinée à être déposée, l'au moins une unité de déplacement de masse volumétrique (18, 19) étant agencée au-dessus de la chambre de masse et comprenant une pluralité de pistons (26, 27) et une ou plusieurs vannes rotatives, lesquels pistons (26, 27) et lesquelles vannes rotatives ont des surfaces coulissantes (28, 29) supportées par des surfaces stationnaires associées (28, 29) au niveau de l'unité déposeuse de masse (12), une pluralité de buses (31, 52, 62), chacune étant une unité distincte, agencées au fond (32) du bloc de distribution de masse (15) car chaque buse (31, 52, 62) est raccordée à la chambre de masse (16, 17) par l'intermédiaire d'un canal respectif (33, 73), et chaque buse (31, 52, 62) ayant un canal intérieur de buse (34, 53, 63) s'étendant à travers,
**caractérisé en**
**ce que** le canal intérieur de buse (34, 53, 63) de chaque buse (31, 52, 62) comprend une ouverture d'entrée (35, 54, 67) et une ouverture de sortie (36, 55, 68) pour la masse, une partie conique supérieure de canal (37, 56, 64) s'étendant depuis l'ouverture d'entrée (35, 54, 67) et se rétrécissant vers une partie centrale rétrécie (38, 57, 66), et une partie conique inférieure de canal (39, 58, 65) s'agrandissant depuis la partie centrale rétrécie (38, 57, 66) vers l'ouverture de sortie (36, 55, 68) au fond de la buse (31, 52, 62).

2. Appareil de production alimentaire (1) selon la revendication 1, **caractérisé en ce que** la partie centrale rétrécie a un diamètre constant et que la longueur de la partie centrale rétrécie est inférieure au diamètre de la partie rétrécie et est supérieure à 0 mm.

3. Appareil de chaîne de production alimentaire (1) selon une ou plusieurs des revendications 1 et 2, **caractérisé en ce que** la partie centrale rétrécie (38, 57, 66) a un diamètre constant (dw), et est agencée dans les limites d'une plage allant jusqu'à +/- 25 % de la longueur complète de canal (L) depuis le milieu (M) entre l'ouverture d'entrée (35, 54, 67) et l'ouverture de sortie (36, 55, 68).

4. Appareil de chaîne de production alimentaire (1) selon une ou plusieurs des revendications 1 à 3, **caractérisé en ce que** le diamètre (dw) de la partie rétrécie (38, 57, 66) est entre 10 % et 90 % du diamètre (d) de l'ouverture d'entrée (35, 54, 67).

5. Appareil de chaîne de production alimentaire (1) selon une ou plusieurs des revendications 1 à 4, **caractérisé en ce que** le diamètre (D) de l'ouverture de sortie (36, 55, 68) est entre 75 % et 500 % du diamètre (d) de l'ouverture d'entrée (35, 54, 67).

6. Appareil de chaîne de production alimentaire (1) selon une ou plusieurs des revendications 1 à 5, **caractérisé en ce que** les angles de cône de la partie conique supérieure de canal (37, 56, 64) et de la partie conique inférieure de canal (39, 58, 65), sont tous les deux entre 5° et 75°.

7. Appareil de chaîne de production alimentaire (1) selon une ou plusieurs des revendications 1 à 6, **caractérisé en ce que** le diamètre (d, D) de l'ouverture de sortie (36, 55) est égal ou supérieur au diamètre (d) de l'ouverture d'entrée (35, 54).

8. Appareil de chaîne de production alimentaire (1) selon la revendication 7, **caractérisé en ce que** l'angle de cône de la partie conique inférieure de canal (39, 58) est égal ou supérieur à l'angle de cône de la partie conique supérieure de canal (37, 56).

9. Appareil de chaîne de production alimentaire (1) selon une ou plusieurs des revendications 1 à 6, **caractérisé en ce que** le diamètre (ds) de l'ouverture de sortie (68) est inférieur au diamètre (d) de l'ouverture d'entrée (67).

10. Appareil de chaîne de production alimentaire (1) selon la revendication 9, **caractérisé en ce que** l'angle de cône de la partie conique inférieure de canal (65) est inférieur à l'angle de cône de la partie conique supérieure de canal (64).

11. Appareil de chaîne de production alimentaire (1) selon une ou plusieurs des revendications 9, 10, **caractérisé en ce qu'**une entrée en forme d'anneau pour une masse secondaire est agencée autour de la partie rétrécie des buses.

12. Appareil de chaîne de production alimentaire (1) selon une ou plusieurs des revendications 1 à 11, **caractérisé en ce que** le support sous-jacent (2) comprend une pluralité de plaques de moule (4, 71) ayant des cavités (5, 6) dans lesquelles chacun des courants de masse sont déposés.

13. Appareil de chaîne de production alimentaire (1) selon une ou plusieurs des revendications 1 à 11, **caractérisé en ce que** le support sous-jacent (2) comprend une bande en acier ou plastique (3) sur laquelle la masse (42) est déposée.

14. Déposeuse (12) destinée à être utilisée dans un appareil de chaîne de production alimentaire (1) selon une ou plusieurs des revendications 1 à 13 et ayant un bloc de distribution de masse en forme de plaque (15) s'étendant horizontalement, agencé au-dessus du support sous-jacent (2), lequel bloc de distribution de masse en forme de plaque (15) comprend au moins une chambre de masse (16, 17) agencée à l'intérieur du bloc (15), et laquelle chambre (16, 17) est raccordée, par l'intermédiaire d'au moins une unité de déplacement de masse volumétrique (18, 19), à un stockage (20) d'une masse de confiserie (21) destinée à être déposée, l'au moins une unité de déplacement de masse volumétrique (18, 19) étant agencée au-dessus de la chambre de masse et comprenant une pluralité de pistons (26, 27) et une ou plusieurs vannes rotatives, lesquels pistons (26, 27) et lesquelles vannes rotatives ont des surfaces coulissantes (28, 29) supportées par des surfaces stationnaires associées (28, 29) au niveau de l'unité déposeuse de masse (12),
une pluralité de buses (31, 52, 62), chacune étant une unité distincte, agencée au fond (32) du bloc de distribution de masse (15) car chaque buse (31, 52, 62) est raccordée à la chambre de masse (16, 17) par l'intermédiaire d'un canal respectif (33, 73), chaque buse (31, 52, 62) ayant un canal intérieur de buse (34, 53, 63) s'étendant à travers,
le canal intérieur de buse (34, 53, 63) de chaque buse (31, 52, 62) comprenant une ouverture d'entrée (35, 54, 67) et une ouverture de sortie (36, 55, 68) pour la masse, une partie conique supérieure de canal (37, 56, 64) s'étendant depuis l'ouverture d'entrée (35, 54, 67) et se rétrécissant vers une partie centrale rétrécie (38, 57, 66), et
une partie conique inférieure de canal (39, 58, 65) s'agrandissant depuis la partie centrale rétrécie (38, 57, 66) vers l'ouverture de sortie (36, 55, 68) au fond de la buse (31, 52, 62).

15. Déposeuse (12) selon la revendication 14, **caractérisée en ce que** la partie centrale rétrécie a un diamètre constant, et que la longueur de la partie centrale rétrécie est inférieure au diamètre de la partie rétrécie et est supérieure à 0 mm.

16. Buse (31, 52, 62) destinée à être utilisée dans un appareil de chaîne de production alimentaire (1) selon une ou plusieurs des revendications 1 à 13, et une déposeuse (12) de la revendication 14 et ayant un canal intérieur de buse (34, 53, 63) s'étendant à travers,
le canal intérieur de buse (34, 53, 63) de chaque buse (31, 52, 62) comprenant une ouverture d'entrée (35, 54, 67) et une ouverture de sortie (36, 55, 68) pour la masse, une partie conique supérieure de canal (37, 56, 64) s'étendant depuis l'ouverture d'entrée (35, 54, 67) et se rétrécissant vers une partie centrale rétrécie (38, 57, 66), et une partie conique inférieure de canal (39, 58, 65) s'agrandissant depuis la partie centrale rétrécie (38, 57, 66) vers l'ouverture de sortie (36, 55, 68) au fond de la buse (31, 52, 62), les angles de cône de la partie conique supérieure de canal (37, 56, 64) et de la partie conique inférieure de canal (39, 58, 65) étant tous les deux entre 5° et 75°.

17. Buse (31, 52, 62) selon la revendication 16, **caractérisée en ce que** la partie centrale rétrécie a un diamètre constant et que la longueur de la partie centrale rétrécie est inférieure au diamètre de la partie rétrécie et est supérieure à 0 mm.

18. Utilisation de l'appareil de chaîne de production alimentaire (1) selon une ou plusieurs des revendications 1 à 13, ou de la déposeuse (12) selon la revendication 14 ou 15, ou d'une buse selon la revendication 16 ou 17, pour dépôt continu de masse de chocolat.

19. Utilisation de l'appareil de chaîne de production alimentaire (1) selon une ou plusieurs des revendications 1 à 13, ou de la déposeuse (12) selon la revendication 14 ou 15, ou d'une buse selon la revendication 16 ou 17, pour dépôt continu de masse de nougat, de masse de caramel, de masse de beurre de cacahuète, ou de masse de confiture.

20. Utilisation de l'appareil de chaîne de production alimentaire (1) selon une ou plusieurs des revendications 1 à 13, ou de la déposeuse (12) selon la revendication 14 ou 15, ou de la buse selon la revendication 17 ou 18, pour dépôt continu de masse de crème ou de masse de fondant.

21. Utilisation de l'appareil de chaîne de production alimentaire (1) selon une ou plusieurs des revendications 1 à 13, ou de la déposeuse (12) selon la revendication 14 ou 15, ou d'une buse selon la revendication 16 ou 17, pour dépôt continu de masse de confiserie avec inclusions.
